# EUROPÄISCHE PATENTSCHRIFT

(11) **EP 3 705 739 B1**
(45) Veröffentlichungstag und Bekanntmachung des Hinweises auf die Patenterteilung: **24.01.2024**
(21) Anmeldenummer: 20159681.4
(22) Anmeldetag: 27.02.2020
(51) Int. Cl.: F16B 37/14, F16B 33/00

(54) **SCHUTZKAPPE FÜR GEWINDEBOLZEN**
PROTECTIVE CAP FOR THREADED BOLTS
CAPUCHON DE PROTECTION POUR BOULONS FILETÉS

(30) Priorität: 06.03.2019 DE 102019105634
(43) Veröffentlichungstag der Anmeldung: 09.09.2020
(73) Patentinhaber: Radolid Thiel GmbH, 58579 Schalksmühle (DE)
(72) Erfinder: Henkes, Fabian, 58511 Lüdenscheid (DE)
(74) Vertreter: Patentanwälte Dörner & Kötter PartG mbB

(56) Entgegenhaltungen:
- WO-A1-2018/041318
- GB-A- 2 511 299
- GB-A- 2 542 418
- US-A1- 2015 035 346
- US-B1- 6 273 658

## Beschreibung

Die Erfindung betrifft eine Schutzkappe für Gewindebolzen zur Kopfüber-Montage bestehend aus einem Kappenkopf sowie einem Kappenmantel, an dem auf seinem dem Kappenkopf abgewandten stirnseitigen Ende eine Dichtlippe ausgebildet ist.

Schutzkappen für Schraubverbindungen sind in vielfältiger Weise bekannt. Sie dienen insbesondere dem Korrosionsschutz der abgedeckten Schraubverbindungen. Mit den Kappen soll verhindert werden, dass Feuchtigkeit an die Schraubverbindungen gelangt und die Schraubverbindungen dadurch beschädigt werden. Die Schutzkappen sind üblicherweise aus Kunststoff hergestellt. Eine solche Schutzkappe ist bspw. aus der DE 10 2005 030 817 A1. Aus der US 6 273 658 B1 und der WO2018/041318 A1 sind Schutzsysteme bzw. Schutzkappen bekannt, die jeweils einen Schmiernippel aufweisen.

Die bekannten Schutzkappen erfüllen die an sie gestellten Aufgaben. Allerdings sind Anwendungsfälle bekannt, bei denen die bekannten Schutzkappen eine Beschädigung der Verschraubung durch Feuchtigkeit nur bedingt verhindern können. Aus der GB 2 511 299 A sowie aus der GB 2 542 418 A ist daher jeweils eine Schutzkappe mit einer Öffnung bekannt. Eine Beschädigung durch Feuchtigkeit ist insbesondere bei Montagesituationen der Fall, bei denen die Schutzkappe auf der dem Boden zugewandten Seite eines Bauteils angebracht ist, sogenannte "Kopfüber-Montage". Bei solchen Einbausituationen kann es zu einer Ansammlung von Flüssigkeit in der Schutzkappe kommen. Dies kann einerseits daraus resultieren, dass das Bauteil, auf dem die Schutzkappe aufliegt, eine raue Oberfläche hat und daher keine ausreichend Abdichtung erfolgen kann. Andererseits kann sich in der Kappe durch starke Temperaturschwankungen Kondenswasser bilden, welches sich dann aufgrund der Schwerkraft im Kopf der Kappe sammelt. Solches Wasser aber auch andere in die Schutzkappe eingedrungene Flüssigkeiten können eine Beschädigung der Schraubbolzen herbeiführen.

Hier will die Erfindung Abhilfe schaffen. Der Erfindung liegt die Aufgabe zu Grunde, eine Schutzkappe zur Kopfüber-Montage zu schaffen, bei der ein Abführen von in die Schutzkappe eingedrungenen oder in der Schutzkappe gebildeten Flüssigkeiten möglich ist. Gemäß der Erfindung wird diese Aufgabe dadurch gelöst, dass an dem Kappenkopf ein Stopfen vorgesehen ist, in dem mindestens eine Öffnung ausgebildet ist, die an dem der Dichtlippe abgewandten äußersten Ende vorgesehen ist und ein selbstständiges Entweichen von Flüssigkeit aufgrund der Schwerkraft ermöglicht.

Mit der Erfindung ist eine Schutzkappe zur Kopfüber-Montage geschaffen, bei der ein Abführen von in die Schutzkappe eingedrungener oder in der Schutzkappe gebildeter Flüssigkeit möglich ist. Durch die Öffnung besteht die Möglichkeit, dass in der Schutzkappe befindliche Flüssigkeit aufgrund der Schwerkraft bei der Kopfüber-Montage aus der Schutzkappe austreten kann. Folglich besteht nicht die Gefahr, dass sich die Flüssigkeit in der Schutzkappe sammelt und dadurch die von der Schutzkappe überdeckte Verschraubung Schaden nimmt.

In Ausgestaltung der Erfindung sind die Öffnungen von Schlitzen gebildet. Diese Ausbildung gewährleistet einerseits ein zuverlässiges Austreten der Flüssigkeit aus der Schutzkappe, andererseits können die Öffnungen dadurch schmal ausgebildet sein, so dass die Gefahr eines Eintretens von Schmutz o. dgl. durch die Öffnungen in die Schutzkappe gering ist.

Vorteilhaft sind die Schlitze rechtwinklig zueinander ausgerichtet und kreuzen einander. Diese Art, die Öffnungen anzuordnen, gewährleistet eine Erstreckung der Öffnungen in einem großen Bereich des Kappenkopfes, so dass in der Schutzkappe befindliche Flüssigkeit auch aus dem Randbereich des Stopfens abgeführt werden kann.

In Weiterbildung der Erfindung ist der Stopfen von einer Scheibe gebildet, an die ein Rohrabschnitt angeformt ist, an dessen der Scheibe abgewandten Seite ein Ring ausgebildet ist. Diese Ausbildung ist einerseits konstruktiv einfach daher leicht zu fertigen, andererseits ermöglicht diese Gestaltung eine zuverlässige Anbringung an der Schutzkappe.

In bevorzugter Weiterbildung der Erfindung liegt die Scheibe in einer Vertiefung im Kappenkopf ein. Hierdurch ist eine bündige Anordnung des Stopfens im Kappenkopf möglich, so dass der Stopfen keine Nachteile für die Verwendung der Schutzkappe im Vergleich zu bekannten Schutzkappen aufweist.

In vorteilhafter Ausgestaltung ist der Stopfen im Kappenkopf geklemmt gehalten. Durch diese Ausführung ist die Montage des Stopfens sehr einfach möglich. Gleichzeitig bietet das die Möglichkeit, den Stopfen bei Bedarf auszutauschen.

Bevorzugt ist der Kappenkopf an seinem Ende außen mit einer Schraubhilfe versehen. Die Schraubhilfe vereinfacht die Handhabung sowohl bei der Montage als auch bei der Demontage der Schutzkappe.

Die Schraubhilfe ist dabei äußerst bevorzugt von einem Außenvielkant gebildet. Die Ausgestaltung in Form eines Außenvielkants ermöglicht dabei einerseits ein einfaches Schrauben mit Hilfe von bekannten Werkzeugen. Andererseits führt die Ausgestaltung als Außenvielkant zu einer größeren Stabilität im Bereich des Kappenkopfes. Die Gefahr einer Beschädigung ist durch das Vorsehen des Außenvielkants reduziert.

In anderer Ausgestaltung der Erfindung sind auf der Innenseite axiale Stege vorgesehen sind, die radial ausgerichtet, und dass die lichte Weite zwischen gegenüberliegenden Stegen im Wesentlichen dem Durchmesser des Gewindebolzens entspricht. Durch die auf der Innenseite der Kappe vorgesehenen Stege ist es möglich, die Schutzkappe auf das Gewinde des Gewindebolzens aufzuschrauben. Der auf den jeweiligen Durchmesser der Gewindebolzen abgestimmte Abstand zwischen den Stegen ermöglicht dabei ein Einschneiden des Gewindes in die freien Enden der Stege. Es ist daher nicht erforderlich, bereits bei der Herstellung der Schutzkappe ein Gewinde in die Stege einzubringen; vielmehr erfolgt dies selbstschneidend beim Aufschrauben der Kappe auf den jeweiligen Gewindebolzen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: den Schnitt entlang der Linie A-A in Figur 2 durch eine erfindungsgemäße Schutzkappe;
- Fig. 2: die Draufsicht auf die in Figur 1 dargestellte Schutzkappe;
- Fig. 3: den Schnitt entlang der Linie B-B in Figur 4 durch einen Stopfen;
- Fig. 4: die Draufsicht auf den in Figur 3 dargestellten Stopfen;
- Fig. 5: die Untersicht auf die erfindungsgemäße Schutzkappe in montiertem Zustand und
- Fig. 6: den Schnitt entlang der Linie A-A in Figur 5 durch eine erfindungsgemäße Schutzkappe in montiertem Zustand.

Die als Ausführungsbeispiel gewählte Schutzkappe ist insbesondere zur Anwendung bei Gewindebolzen vorgesehen, bei denen die Montage auf der dem Boden zugewandten Seite eines Bauteils erfolgt, sogenannte "Kopfüber-Montage". Sie besteht aus einem Kappenkopf 1 sowie einem Kappenmantel 2. An dem dem Kappenkopf 1 abgewandten stirnseitigen Ende der Kappe, welches dem jeweiligen Bauteil zugewandt ist, sind eine Absetzlippe 3 sowie eine Dichtlippe 4 ausgebildet. Die Dichtlippe 4 liegt in montiertem Zustand der Schutzkappe auf dem jeweiligen Bauteil auf.

In Abwandlung des Ausführungsbeispiels besteht die Möglichkeit, dass die Absetzlippe 3 ebenfalls bis auf das Bauteil ragt. In diesem Fall ist die zwischen Absetzlippe 3 und Dichtlippe 4 vorgesehene Rinne 5 als Unterbrechung zwischen den beiden Lippen 3 und 4 zu sehen. Die Rinne 5 bildet dann eine Unterbrechung von Kriechwegen innerhalb der von der Absetzlippe 3 sowie der Dichtlippe 4 gebildeten Dichtfläche, was eine Verbesserung der Dichtwirkung bedeutet, da die Kapillarkräfte die Rinne bei Bauteilen mit glatter Oberfläche nicht überwinden können.

Auf der Innenseite des Kappenmantels 2 sind axiale Stege 6 vorgesehen, die radial ausgerichtet sind. Die Stege 6 erstrecken sich in Längsrichtung über einen Teil der Höhe der Kappe. Die Stege 6 können sich beispielsweise über ein oder zwei Drittel der Höhe der Kappe erstrecken; auch die Erstreckung über die halbe Höhe der Kappe ist möglich. Die Erstreckung der Stege 6 ist abhängig von der jeweiligen Einbausituation und erfolgt somit in Abhängigkeit der Ausbildung des jeweiligen Gewindebolzens bzw. der Anordnung von Muttern auf dem Gewindebolzen.

Die Stege 6 sind symmetrisch über den Umfang der Schutzkappe verteilt angeordnet. Im Ausführungsbeispiel sind sechs Stege 6 vorgesehen. An ihren freien Enden können die Stege 6 in Abwandlung des Ausführungsbeispiels spitz ausgebildet sein. Der Abstand zwischen gegenüberliegenden Stegen 6, also die lichte Weite zwischen den Stegen, entspricht im Wesentlichen dem Gewindedurchmesser des Gewindebolzens, den die Kappe schützen soll. Die Abmessungen sind dabei so dimensioniert, dass die freien Enden der Stege 6 einen geringfügig kleineren Abstand zueinander aufweisen als der Außendurchmesser des Gewindes. Hierdurch ist gewährleistet, dass sich das Gewinde des Bolzens beim Aufschrauben der Schutzkappe in die Stege 6 einschneidet.

Auf der Außenseite des Kappenmantels 2 ist eine Schraubhilfe 7 vorgesehen. Im Ausführungsbeispiel ist die Schraubhilfe 7 am Ende des Kappenkopfes 1 vorgesehen. Die Schraubhilfe 7 ist von einem Außenvielkant gebildet. Im Ausführungsbeispiel handelt es sich um einen Außensechskant. Die Schraubhilfe 7 ist somit in einfacher Weise mit üblichen Werkzeugen handhabbar. Gleichzeitig ist durch den Außenvielkant die Stabilität der Schutzkappe im Vergleich zu bekannten Schutzkappen erhöht.

Der Kappenkopf 1 ist im Bereich der Schraubhilfe 7 von einer Bohrung 8 durchsetzt. Die Bohrung 8 weist in ihrem dem Kappenmantel 2 abgewandten Bereich eine Verjüngung 9 auf, an die sich eine kreisförmige Vertiefung 10 anschließt, die an der Stirnseite der Schutzkappe ausgebildet ist.

An dem Kappenkopf 1 ist ein Stopfen 11 vorgesehen. Der Stopfen 11 ist im Ausführungsbeispiel von einer Scheibe 11.1 gebildet. Die Scheibe 11.1 des Stopfens 11 liegt in der Vertiefung 10 im Kappenkopf 1 ein und ist am stirnseitigen Ende des Kappenkopfes 1 angeordnet. Sie schließt daher bündig mit der Stirnseite der Schutzkappe ab. Auf der dem Kappenkopf 1 zugewandten Seite ist an die Scheibe 11.1 ein Rohrabschnitt 11.2 angeformt, an dessen der Scheibe 11.1 abgewandten Seite ein Ring 11.3 ausgebildet ist, dessen Außendurchmesser größer als der des Rohrabschnitts 11.2, jedoch kleiner als der der Scheibe 11.1 ist. In dem Stopfen 11 sind Öffnungen ausgebildet, die im Ausführungsbeispiel von Schlitzen 11.4 gebildet sind. Im Ausführungsbeispiel sind zwei rechtwinklig zueinander ausgerichtete Schlitze 11.4 vorgesehen, die einander kreuzen, wobei der Schnittpunkt der beiden Schlitze 11.4 im Mittelpunkt der Scheibe 11.1 angeordnet ist. Andere Formen der Öffnungen, bspw. in Form einer Lochung, sind ebenfalls möglich.

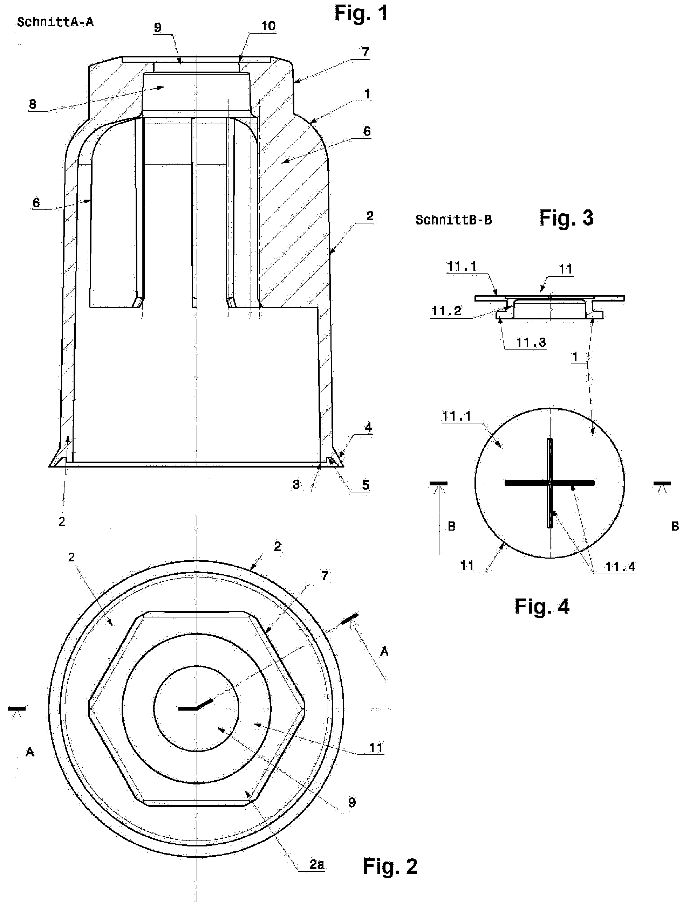

Der Stopfen 11 ist im Kappenkopf 1 der Schutzkappe geklemmt gehalten. Dies ist dadurch bewirkt, dass zur Montage des Stopfens 11 der Ring 11.3 durch die Verjüngung 9 gedrückt wird. Sobald der Ring 11.3 die Verjüngung 9 passiert hat, liegt der Ring 11.3 an der die Verjüngung umgebenden Wandung auf der Innenseite der Schutzkappe an (vgl. Figur 2). Somit ist der Stopfen 11 zuverlässig an der Schutzkappe befestigt. Durch die Anordnung des Stopfens 11 im Kappenkopf sind die im Ausführungsbeispiel von den Schlitzen 11.4 gebildeten Öffnungen an dem den Lippen 3 und 4 abgewandten Ende der Schutzkappe vorgesehen. Sie sind folglich am äußersten Ende er Schutzkappe positioniert.

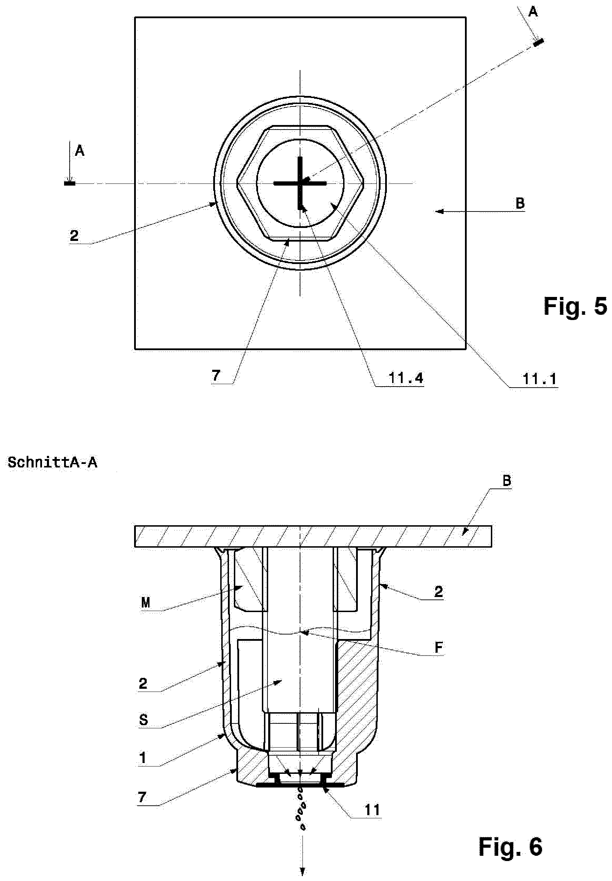

Mit der erfindungsgemäßen Schutzkappe insbesondere zur Anwendung bei Gewindebolzen, bei denen die Montage auf der dem Boden zugewandten Seite eines Bauteils erfolgt, ist die Möglichkeit geschaffen, in das Innere der Schutzkappe eingedrungene Flüssigkeit oder in der Kappe beispielsweise durch starke Temperaturschwankungen gebildetes Kondenswasser aus der Schutzkappe abzuführen. Bei der sogenannten "Kopfüber-Montage", wie sie in den Figuren 5 und 6 dargestellt ist, umgibt die Schutzkappe in bekannter Weise den Schraubbolzen S sowie die Mutter M. Dabei führt der Einfluss der Schwerkraft zu einer Ansammlung der Flüssigkeit F im Bereich des Kappenkopfes, bei welcher es sich um Kondenswasser oder auch um in die Schutzkappe zwischen Dichtlippe 4 und dem Bauteil B mit rauer Oberfläche eingedrungene Flüssigkeit handeln kann. Die Öffnungen in Form der Schlitze 11.4 ermöglichen dann aufgrund der Schwerkraft und ihrer Position am äußersten dem Boden zugewandten Punkt der Schutzkappe das selbstständige Entweichen der Flüssigkeit, so dass ein Anstauen von Flüssigkeit in der Schutzkappe und damit eine Korrosion des von der Schutzkappe umgebenen Schraubbolzens vermieden ist.

## Patentansprüche

1. Schutzkappe für Gewindebolzen zur Kopfüber-Montage bestehend aus einem Kappenkopf (1) sowie einem Kappenmantel (2), an dem auf seinem dem Kappenkopf (1) abgewandten stirnseitigen Ende eine Dichtlippe (4) ausgebildet ist, **dadurch gekennzeichnet, dass** an dem Kappenkopf (1) ein Stopfen (11) vorgesehen ist, in dem mindestens eine Öffnung ausgebildet ist, die an dem der Dichtlippe (4) abgewandten äußersten Ende vorgesehen ist und ein selbstständiges Entweichen von Flüssigkeit aufgrund der Schwerkraft ermöglichen.

2. Schutzkappe nach Anspruch 1, **dadurch gekennzeichnet, dass** die Öffnungen von Schlitzen (11.4) gebildet sind.

3. Schutzkappe nach Anspruch 2, **dadurch gekennzeichnet, dass** die Schlitze (11.4) rechtwinklig zueinander ausgerichtet sind und einander kreuzen.

4. Schutzkappe nach einem der Ansprüche 1 bis 3, **dadurch gekennzeichnet, dass** der Stopfen (11) von einer Scheibe (11.1) gebildet ist, an die ein Rohrabschnitt (11.2) angeformt ist, an dessen der Scheibe (11.1) abgewandten Seite ein Ring (11.3) ausgebildet ist.

5. Schutzkappe nach Anspruch 4, **dadurch gekennzeichnet, dass** die Scheibe (11.1) in einer Vertiefung (10) im Kappenkopf (1) einliegt.

6. Schutzkappe nach einem der Ansprüche 1 bis 5, **dadurch gekennzeichnet, dass** der Stopfen (11) im Kappenkopf (1) geklemmt gehalten ist.

7. Schutzkappe nach einem der Ansprüche 1 bis 6, **dadurch gekennzeichnet, dass** der Kappenkopf (1) an seinem Ende außen mit einer Schraubhilfe (7) versehen ist.

8. Schutzkappe nach Anspruch 7, **dadurch gekennzeichnet, dass** die Schraubhilfe (7) von einem Außenvielkant gebildet ist.

9. Schutzkappe nach einem der Ansprüche 1 bis 8, **dadurch gekennzeichnet, dass** auf der Innenseite axiale Stege (6) vorgesehen sind, die radial ausgerichtet sind, und dass die lichte Weite zwischen gegenüberliegenden Stegen (6) im Wesentlichen dem Durchmesser des Gewindebolzens entspricht.

## Claims

1. Protective cap for threaded bolts for upside down installation consisting of a cap top (1) as well as a cap casing (2), on which, on its end face facing away from the cap top (1), a sealing lip (4) is formed, **characterised in that** a plug (11) is provided on the cap top (1), in which at least one opening is formed, which is provided at the outermost end facing away from the sealing lip (4) and allows an independent escape of liquid due to gravity.

2. Protective cap according to claim 1, **characterised in that** the openings are formed by slots (11.4).

3. Protective cap according to claim 2, **characterised in that** the slots (11.4) are oriented at right angles to one another and cross each other.

4. Protective cap according to one of claims 1 to 3, **characterised in that** the plug (11) is formed by a disc (11.1), on which a tube section (11.2) is formed, on the side of which facing away from the disc (11.1) a ring (11.3) is formed.

5. Protective cap according to claim 4, **characterised in that** the disc (11.1) lies in a recess (10) in the cap top (1).

6. Protective cap according to one of claims 1 to 5, **characterised in that** the plug (11) is held clamped in the cap top (1).

7. Protective cap according to one of claims 1 to 6, **characterised in that** the cap top (1) is provided with a screwing aid (7) on the outside at its end.

8. Protective cap according to claim 7, **characterised in that** the screwing aid (7) is formed by an external polygon.

9. Protective cap according to one of claims 1 to 8, **characterised in that** axial webs (6) are provided on the inner side, which are radially aligned, and **in that** the clear width between opposite webs (6) substantially corresponds to the diameter of the threaded bolt.

## Revendications

1. Capuchon de protection pour boulons filetés à monter la tête en bas, constitué d'une tête de capuchon (1) ainsi que d'une enveloppe de capuchon (2) sur l'extrémité frontale de laquelle, du côté opposé à la tête de capuchon (1), une lèvre d'étanchéité (4) est formée, **caractérisé en ce que** sur la tête de capuchon (1), un bouchon (11) est prévu, dans lequel au moins une ouverture prévue à l'extrémité opposée à la lèvre d'étanchéité (4) est formée et permet un écoulement autonome de liquide en raison de la force de gravité.

2. Capuchon de protection selon la revendication 1, **caractérisé en ce que** les orifices sont formés par des rainures (11.4).

3. Capuchon de protection selon la revendication 2, **caractérisé en ce que** les rainures (11.4) sont perpendiculaires les unes aux autres et se croisent.

4. Capuchon de protection selon l'une des revendications 1 à 3, **caractérisé en ce que** le bouchon (11) est formé d'un disque (11.1) sur lequel une section de tube (11.2) où un anneau (11.3) est formé du côté opposé au disque (11.1) est formée.

5. Capuchon de protection selon la revendication 4, **caractérisé en ce que** le disque (11.1) est logé dans un renfoncement (10) de la tête de capuchon.

6. Capuchon de protection selon l'une des revendications 1 à 5, **caractérisé en ce que** le bouchon (11) est serré dans la tête de capuchon (1).

7. Capuchon de protection selon l'une des revendications 1 à 6, **caractérisé en ce que** la tête de capuchon (1) est dotée d'une aide au vissage (7) à l'extérieur à son extrémité.

8. Capuchon de protection selon la revendication 7, **caractérisé en ce que** l'aide au vissage (7) est formée d'un polygone extérieur.

9. Capuchon de protection selon l'une des revendications 1 à 8, **caractérisé en ce que** des nervures axiales (6) orientées radialement sont prévues sur la face intérieure, et que le diamètre intérieur entre des nervures (6) situées en faces les unes des autres correspond essentiellement au diamètre du boulon fileté.
